# EUROPÄISCHE PATENTSCHRIFT

(11) **EP 2 003 002 B1**
(45) Veröffentlichungstag und Bekanntmachung des Hinweises auf die Patenterteilung: **24.02.2010**
(21) Anmeldenummer: 08008700.0
(22) Anmeldetag: 09.05.2008
(51) Int. Cl.: B60G 17/02, B60G 15/06, F16C 11/06

(54) **Federbein für ein Kraftfahrzeug mit einem axial verstellbaren Federteller**
Suspension strut for a motor vehicle with an axially adjustable spring disc
Jambe de force pour un véhicule automobile doté d'une coupelle de ressort réglable axialement

(30) Priorität: 15.06.2007 DE 102007027514
(43) Veröffentlichungstag der Anmeldung: 17.12.2008
(73) Patentinhaber: Audi AG, 85045 Ingolstadt (DE)
(72) Erfinder: Michel, Wilfried, 93339 Riedenburg (DE)
(74) Vertreter: Asch, Konrad

(56) Entgegenhaltungen:
- DE-A1-102005 001 742
- DE-B3- 10 255 764

## Beschreibung

Die Erfindung betrifft ein Federbein für ein Kraftfahrzeug mit einem axial verstellbaren Federteller gemäß der im Oberbegriff des Anspruches 1 angegebenen Art.

Ein gattungsgemäßes, sämtliche Merkmale des Oberbegriffes des Anspruches 1 aufweisendes Federbein für ein Kraftfahrzeug mit einem axial verstellbaren Federteller ist in der DE 10 2005 001 742 A1 beschrieben. Das offenbarte Federbein umfasst im Wesentlichen einen Schwingungsdämpfer mit einem Zylinder und einer darin axial verschiebbar gelagerten Kolbenstange, eine mit dem Federteller in Wirkverbindung stehende Tragfeder, einen Ring-Elektromotor mit einem Rotor und einem über sein Motorgehäuse mit der Kolbenstange in Wirkverbindung stehenden Stator, so wie einen Kugelgewindetrieb mit einer um die Kolbenstange drehbar gelagerten Gewindespindel und einer Gewindemutter. Das Federbein ist über eine Lagerung am Kraftfahrzeugaufbau festgelegt, wobei die Lagerung sphärische Lagerflächen aufweist, die zumindest eine Schwenkbewegung des Federbeins zum Kraftfahrzeugaufbau zulassen. Die axiale Verstellung des Federtellers ist dadurch bewirkbar, dass der Rotor in Wirkverbindung mit der Gewindespindel und der Federteller in Wirkverbindung mit der Gewindemutter steht, so dass eine von dem Ring-Elektromotor initiierte Rotationsbewegung des Rotors eine Translationsbewegung des Federtellers bewirkt.

Als nachteilig erweist sich hierbei der Umstand, dass die Kolbenstange sowohl in der Lagerung als auch im Dämpfer drehbar gelagert und das den Stator umfassende Motorgehäuse mit der Kolbenstange verbunden ist, also dass sowohl der Stator mit Motorgehäuse als auch der Rotor hinsichtlich eines rotatorischen Freiheitsgrades nicht festgelegt sind. Die Konsequenz daraus ist, dass die Reaktionsmomente des rotatorischen Antriebes nicht abgestützt werden und die Bauteile sich beliebig zueinander drehen können.

Der Erfindung liegt die Aufgabe zugrunde, ein Federbein für ein Kraftfahrzeug mit einem axial verstellbaren Federteller gemäß der im Oberbegriff des Anspruches 1 angegebenen Art unter Vermeidung der genannten Nachteile derart weiter zu bilden, dass eine Abstützung der Antriebsmomente gewährleistet ist.

Diese Aufgabe wird durch die kennzeichnenden Merkmale des Anspruches 1 in Verbindung mit seinen Oberbegriffsmerkmalen gelöst.

Die Unteransprüche bilden vorteilhafte Weiterbildungen der Erfindung.

Nach der Erfindung umfasst das Federbein für ein Kraftfahrzeug mit einem axial verstellbaren Federteller einen Schwingungsdämpfer mit einem Zylinder und einer darin axial verschiebbar gelagerten Kolbenstange, eine mit dem axial verstellbaren Federteller in Wirkverbindung stehende Tragfeder, einen Ring-Elektromotor mit einem Rotor und einem mit der Kolbenstange in Wirkverbindung stehenden Stator, einen Kugelgewindetrieb mit einer um die Kolbenstange drehbar gelagerten Gewindespindel und einer Gewindemutter, wobei der Rotor in Wirkverbindung mit der Gewindespindel und der Federteller in Wirkverbindung mit der Gewindemutter steht, so dass eine von dem Ring-Elektromotor initiierte Rotationsbewegung des Rotors eine Translationsbewegung des Federtellers bewirkt, sowie eine Lagerung zur Festlegung des Federbeins am Kraftfahrzeugaufbau,'wobei die Lagerung sphärische Lagerflächen aufweist, die zumindest eine Schwenkbewegung des Federbeins zum Kraftfahrzeugaufbau zulassen. Erfindungsgemäß steht im Bereich der Lagerung das Federbein über ein radial- und rotationssteifes, axial und kardanisch weiches Bauteil mit dem Kraftfahrzeugaufbau in Wirkverbindung.

Der große Vorteil besteht nun darin, dass durch das Vorsehen des erfindungsgemäßen Bauteils eine kardanische Bewegung des Federbeins weiterhin möglich ist, d. h. dass bei einer Auslenkung des Federbeins keinerlei Querkräfte in den Lagerungen und Dämpferführungen auftreten, während das Bauteil gegenüber Drehmomenten extrem steif ist, d. h. dass eine Abstützung der Reaktionsmomente des rotatorischen Antriebes gewährleistet ist.

Vorzugsweise umschließt das Bauteil im Bereich der Lagerung die Kolbenstange vollständig. Die Ausbildung des Bauteils als ein die Lagerung vollständig umschließendes Bauteil hat den Effekt, dass hierdurch ein Eindringen von Fremdkörpern und Schmutz in die sphärische Lagerung erfolgreich verhindert wird.

Gemäß einer ersten Ausführungsform der Erfindung ist das Bauteil mit seinem, dem Kraftfahrzeugaufbau abgewandten Endbereich an dem Stator festgelegt.

Gemäß einer zweiten Ausführungsform ist das Bauteil mit seinem dem Kraftfahrzeugaufbau abgewandten Endbereich an der Kolbenstange festgelegt.

Vorzugsweise ist das Bauteil als ein Metallbalg ausgebildet. Die Ausbildung des Bauteils als Metallbalg erweist sich als besonders vorteilhaft, da die Falten des Metallbalgs bei Winkeländerung sehr leicht nachgeben und somit der Metallbalg in diese Richtung sehr weich ist, während beim Aufbringen von Drehmomenten dieser äußerst steif ist. Exakt diese Eigenschaften sind gefordert und erwünscht und werden mit diesem Konstruktionselement auf eine kostengünstige Art und Weise erfüllt.

Weitere Vorteile, Merkmale und Anwendungsmöglichkeiten der vorliegenden Erfindung ergeben sich aus der nachfolgenden Beschreibung in Verbindung mit den in der Zeichnung dargestellten Ausführungsbeispielen.

Die Erfindung wird im Folgenden anhand der in der Zeichnung dargestellten Ausführungsbeispiele näher beschrieben.

In der Beschreibung, in den Patentansprüchen, in der Zusammenfassung und in der Zeichnung werden die in der unten aufgeführten Liste der Bezugszeichen verwendeten Begriffe und zugeordneten Bezugszeichen verwendet. In der Zeichnung bedeuten:
- Fig. 1: eine schematische Schnittdarstellung eines Federbeins für ein Kraftfahrzeug mit einem axial verstellbaren Federteller nach dem Stand der Technik;
- Fig. 2: eine schematische Schnittdarstellung der oberen Lagerung eines erfindungsgemäßen Federbeins und
- Fig. 3: eine schematische Schnittdarstellung einer weiteren Ausführungsform der oberen Lagerung eines erfindungsgemäßen Federbeins.

In der nachfolgenden Beschreibung und in den Figuren werden zur Vermeidung von Wiederholungen gleiche Bauteile und Komponenten mit gleichen Bezugszeichen gekennzeichnet, sofern keine weitere Differenzierung erforderlich oder sinnvoll ist.

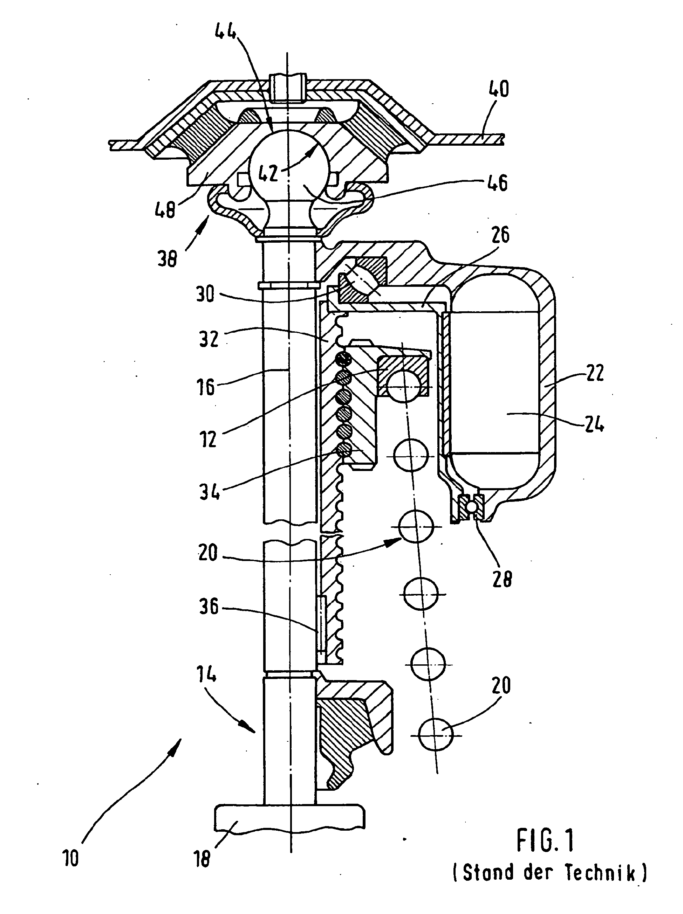

Das in Fig. 1 in einer vereinfachten Schnittdarstellung mehr oder minder schematisch dargestellte, insgesamt mit der Bezugsziffer 10 bezeichnete Federbein mit einem axial verstellbaren Federteller 12 umfasst im Wesentlichen einen an sich bekannten Schwingungsdämpfer 14 mit einer Kolbenstange 16, die axial in einem Zylinder 18 verschiebbar gelagert ist.

Eine Tragfeder 20 stützt sich zwischen dem verstellbaren Federteller 12 und einem zylinder- oder achsseitigen Federteller, der vorliegend aus Gründen der Übersichtlichkeit nicht dargestellt ist, ab.

In einem mit der Kolbenstange 16 in Wirkverbindung stehenden Gehäuse 22 ist ein Ring-Elektromotor angeordnet. Der Ring-Elektromotor verfügt über einen Stator 24 und einen darin gelagerten Rotor 26, der über zwei Lager 28, 30 zum Gehäuse 22 positioniert ist. An dem Rotor 26 ist eine Gewindespindel 32 befestigt, die mit einer Gewindemutter 34 eine Rotorbewegung in eine Axialbewegung umsetzt, wobei die Gewindemutter mit dem Federteller 12 verbunden ist.

Um Querkräfte, die auf die Gewindespindel 32 wirken, besser abstützen zu können, ist zwischen der Kolbenstange 16 und der Innenseite der Gewindespindel 32 ein Radiallager 36 angeordnet.

Das gesamte Federbein 10 ist über eine einzige Lagerung 38 mit einem Kraftfahrzeugaufbau 40 verbunden. Die Lagerung 38 verfügt über sphärische Lagerflächen 42, 44, die zumindest eine Schwenkbewegung des Federbeins 10 zum Kraftfahrzeugaufbau 40 zulassen. Vorliegend sind die sphärischen Lagerflächen 42, 44 an einem Kugelkopf ausgebildet. Ein Kugelzapfen 46 ist in einer Kugelpfanne 48 dreh- und schwenkbar gelagert, so dass eine räumliche Federungsbewegung des Federbeins 10 zum Kraftfahrzeugaufbau 40 ohne Deformation von Lagerteilen ausgeführt werden kann.

Das aus dem Stand der Technik bekannte Federbein 10 erweist sich als nachteilig, da die Reaktionsmomente des rotatorischen Antriebs nicht abgestützt werden können.

Die Kobenstange 16 ist sowohl in der Lagerung 38 als auch im Zylinder 18 drehbar gelagert. Das Gehäuse 22 des Ring-Elektromotors ist ebenfalls mit der Kolbenstange 16 verbunden. Soll nun der Federteller 12 axial verstellt werden, so muss der Rotor 26 in Drehung versetzt werden. Dies geschieht über den im Normalfall gegenüber dem Federbein 10 festgelegten Ring-Elektromotor. Der im Gehäuse 22 befindliche Stator 24 erzeugt durch Anlegen einer Spannung ein Magnetfeld, welches folglich auf den Rotor 26 ein Moment ausübt. Je nach den Reibungsverhältnissen ist die Übertragung und Abstützung der Antriebsmomente indifferent. Da sowohl der Stator 24 mit Gehäuse 22, als auch der Rotor 26 hinsichtlich eines rotatorischen Freiheitsgrades nicht festgelegt sind, können sich beide Bauteile nach belieben drehen.

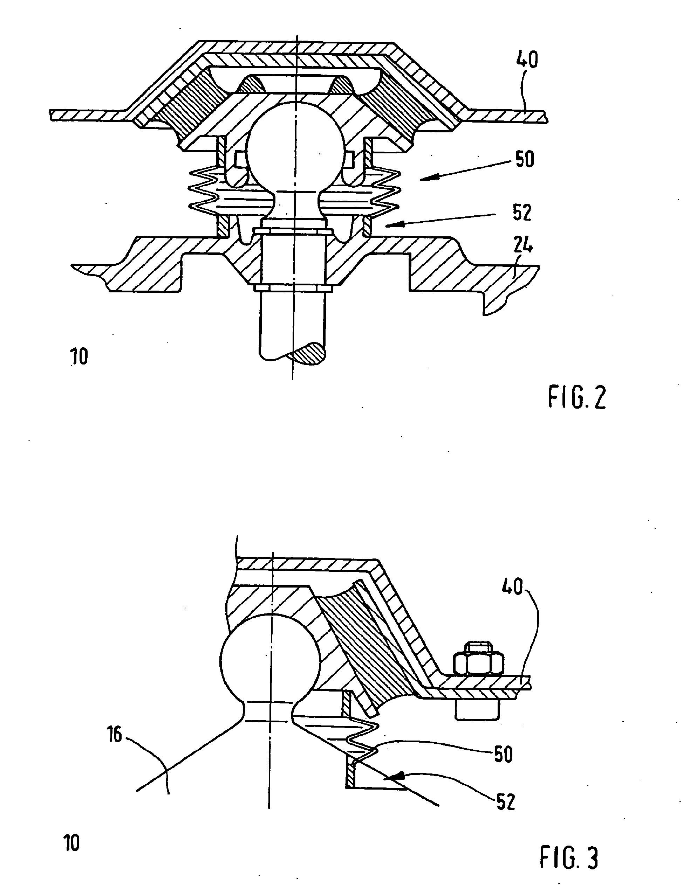

Zur Vermeidung dieses Nachteils ist gemäß dem erfindungsgemäßen Federbein 10 nach Fig. 2 vorgesehen, dass im Bereich der Lagerung 38 das Federbein 10 über ein radial- und rotationssteifes, axial und kardanisch weiches Bauteil 50 mit dem Kraftfahrzeugaufbau 40 in Wirkverbindung steht.

Hierzu ist das Bauteil 50 einerseits mit einem Ende an der Kugelpfanne 48 festgelegt und andererseits mit seinem dem Kraftfahrzeugaufbau 40 abgewandten Endbereich 52 mit dem Gehäuse 22 fest verbunden.

Das Bauteil 50 ist vorliegend als ein Metallbalg ausgebildet, der im Bereich der Lagerung 38 die Kolbenstange 16 vollständig umschließt.

Der große Vorteil besteht nun darin, dass der Metallbalg die kardanische Bewegung des Federbeins 10 ohne weiteres mitmacht, und gegenüber Drehmomenten extrem steif ist, d. h. also bei Winkeländerungen geben die Falten des Metallbalgs sehr leicht nach, der Metallbalg ist in dieser Richtung weich. Beim Aufbringen von Drehmomenten jedoch äußert steif. Es entstehen bei Auslenkung des Federbeins 10 keinerlei Querkräfte in den Lagerungen und Dämpferführungen. Weiterhin verhindert der Metallbalg ein Eindringen von Fremdkörpern und Schmutz in die sphärische Lagerung.

Gemäß dem in Fig. 3 dargestellten Ausführungsbeispiel ist der Metallbalg 50 mit seinem dem Kraftfahrzeugaufbau 40 abgewandten Endbereich 52 an der Kolbenstange 16 festgelegt.

### BEZUGSZEICHENLISTE

- 10: Federbein
- 12: Axial verstellbarer Federteller
- 14: Schwingungsdämpfer
- 16: Kolbenstange
- 18: Zylinder
- 20: Tragfeder
- 22: Gehäuse
- 24: Stator
- 26: Rotor
- 28: Lager
- 30: Lager
- 32: Gewindespindel
- 34: Gewindemutter
- 36: Radiallager
- 38: Lagerung
- 40: Kraftfahrzeugaufbau
- 42: Sphärische Lagerfläche
- 44: Sphärische Lagerfläche
- 46: Kugelzapfen
- 48: Kugelpfanne
- 50: Bauteil/Metallbalg
- 52: Endbereich

## Patentansprüche

1. Federbein (10) für ein Kraftfahrzeug mit einem axial verstellbaren Federteller (12) umfassend
- einen Schwingungsdämpfer (14) mit einem Zylinder (18) und einer darin axial verschiebbar gelagerten Kolbenstange (16),
- eine mit dem axial verstellbaren Federteller (12) in Wirkverbindung stehende Tragfeder (20),
- einen Ring-Elektromotor mit einem Rotor (26) und einem mit der Kolbenstange (16) in Wirkverbindung stehenden Stator (24),
- einen Kugelgewindetrieb mit einer um die Kolbenstange (16) drehbar gelagerten Gewindespindel (32) und einer Gewindemutter (34), wobei der Rotor (26) in Wirkverbindung mit der Gewindespindel (32) und der Federteller in Wirkverbindung mit der Gewindemutter (34) steht, sodass eine von dem Ring-Elektromotor initiierte Rotationsbewegung des Rotors (26) eine Translationsbewegung des Federtellers (12) bewirkt, sowie
- eine Lagerung (38) zur Festlegung des Federbeins (10) am Kraftfahrzeugaufbau (40), wobei die Lagerung sphärische Lagerflächen (42, 44) aufeist, die zumindest eine Schwenkbewegung des Federbeins (10) zum Kraftfahrzeugaufbau zulassen,
**dadurch gekennzeichnet, dass** im Bereich der Lagerung (38) das Federbein (10) über ein radial- und rotationssteifes, axial und kardanisch weiches Bauteil (50) mit dem Kraftfahrzeugaufbau (40) in Wirkverbindung steht.

2. Federbein nach Anspruch 1, **dadurch gekennzeichnet, dass** das Bauteil (50) im Bereich der Lagerung (38) die Kolbenstange (16) vollständig umschließt.

3. Federbein nach den Ansprüchen 1 oder 2, **dadurch gekennzeichnet, dass** das Bauteil (50) mit seinem dem Kraftfahrzeugaufbau (40) abgewandten Endbereich (52) an dem Gehäuse (22) festgelegt ist.

4. Federbein nach den Ansprüchen 1 oder 2, **dadurch gekennzeichnet, dass** das Bauteil (50) mit seinem dem Kraftfahrzeugaufbau (40) abgewandten Endbereich (52) an der Kolbenstange (16) festgelegt ist.

5. Federbein nach einem der vorstehenden Ansprüche, **dadurch gekennzeichnet, dass** das Bauteil (50) als ein Metallbalg ausgebildet ist.

## Claims

1. Suspension strut (10) for a motor vehicle with an axially adjustable spring disc (12), comprising
- a vibration damper (14) having a cylinder (18) and having a piston rod (16) mounted therein in an axially movable manner,
- a supporting spring (20) which is operatively connected to the axially adjustable spring disc (12),
- an annular electric motor having a rotor (26) and having a stator (24) which is operatively connected to the piston rod (16),
- a ball screw drive having a threaded spindle (32) which is mounted so as to be rotatable about the piston rod (16) and having a threaded nut (34), with the rotor (26) being operatively connected to the threaded spindle (32) and with the spring disc being operatively connected to the threaded nut (34), such that a rotational movement of the rotor (26) initiated by the annular electric motor brings about a translatory movement of the spring disc (12), and
- a mount (38) for fixing the suspension strut (10) to the motor vehicle body (40), with the mount having spherical mount surfaces (42, 44) which permit at least a pivoting movement of the spring strut (10) relative to the motor vehicle body,
**characterized in that**, in the region of the mount (38), the spring strut (10) is operatively connected to the motor vehicle body (40) by means of a radially and rotationally rigid, axially and cardanically flexible component (50).

2. Suspension strut according to Claim 1, **characterized in that** the component (50) completely surrounds the piston rod (16) in the region of the mount (38).

3. Suspension strut according to Claims 1 or 2, **characterized in that** the component (50) is fixed with its end region (52) facing away from the motor vehicle body (40) to the housing (22).

4. Suspension strut according to Claims 1 or 2, **characterized in that** the component (50) is fixed with its end region (52) facing away from the motor vehicle body (40) to the piston rod (16).

5. Suspension strut according to one of the preceding claims, **characterized in that** the component (50) is designed as a metal bellows.

## Revendications

1. Jambe de force (10) pour un véhicule automobile comprenant une coupelle de ressort (12) réglable axialement comprenant :
- un amortisseur de vibrations (14) avec un cylindre (18) et une tige de piston (16) montée de manière déplaçable axialement dans celui-ci,
- un ressort porteur (20) en liaison fonctionnelle avec la coupelle de ressort (12) réglable axialement,
- un moteur électrique annulaire comprenant un rotor (26) et un stator (24) en liaison fonctionnelle avec la tige de piston (16),
- une vis d'entraînement à billes avec une vis à billes (32) montée à rotation autour de la tige de piston (16) et un écrou (34), le rotor (26) étant en liaison fonctionnelle avec la vis à billes (32) et la coupelle de ressort étant en liaison fonctionnelle avec l'écrou (34), de sorte qu'un mouvement de rotation du rotor (26) amorcé par le moteur électrique annulaire provoque un mouvement de translation de la coupelle de ressort (12), ainsi qu'un
- support de palier (38) pour fixer la jambe de force (10) sur la carrosserie du véhicule automobile (40), le support de palier présentant des surfaces de palier sphériques (42, 44) qui autorisent au moins un mouvement de pivotement de la jambe de force (10) par rapport à la carrosserie du véhicule automobile,
**caractérisée en ce que** dans la région du support de palier (38), la jambe de force (10) est en liaison fonctionnelle avec la carrosserie du véhicule automobile (40) par le biais d'un composant (50) rigide radialement et en rotation, et souple axialement et à cardan.

2. Jambe de force selon la revendication 1, **caractérisée en ce que** le composant (50), dans la région du support de palier (38), entoure complètement la tige de piston (16).

3. Jambe de force selon la revendication 1 ou 2, **caractérisée en ce que** le composant (50) est fixé au carter (22) avec sa région d'extrémité (52) opposée à la carrosserie du véhicule automobile (40).

4. Jambe de force selon la revendication 1 ou 2, **caractérisée en ce que** le composant (50) est fixé à la tige de piston (16) avec sa région d'extrémité (52) opposée à la carrosserie du véhicule automobile (40).

5. Jambe de force selon l'une quelconque des revendications précédentes, **caractérisée en ce que** le composant (50) est réalisé sous forme de soufflet métallique.
